Europäisches Patentamt

(19) European Patent Office

Office européen des brevets

(11) **EP 0 692 768 A2**

(12) **EUROPEAN PATENT APPLICATION**

(43) Date of publication:
**17.01.1996 Bulletin 1996/03**

(51) Int. Cl.⁶: **G06K 9/68**

(21) Application number: **95110987.5**

(22) Date of filing: **13.07.1995**

(84) Designated Contracting States:
**BE CH DE ES FR GB IT LI NL SE**

(30) Priority: **15.07.1994 US 276116**

(71) Applicant: **FROESSL, Horst**
**D-69502 Hemsbach (DE)**

(72) Inventors:
• **Froessl, Horst**
 **D-6944 Hemsbach (DE)**
• **Farley, Walter C.**
 **Wheaton, MD 20902 (US)**

(74) Representative: **Frei, Alexandra Sarah**
**CH-8029 Zürich (CH)**

(54) **Full text storage and retrieval in image at OCR and code speed**

(57) A computer-implemented method assigns value codes to characters, numbers, special signs, words and the like at code speed for storage and retrieval. Value codes of characters and character groups on a document are produced by scanning the document to make a bit map image of printed material in the document, the bit map being stored in a memory. Lines 1-8 of bits in the memory are analyzed and compared with stored value codes in a character and word structure code table. When matches are found, value codes for the document are stored in a separate memory along with standard computer codes (such as ASCII) and information usable to retrieve the material. The value codes are constructed from all portions of the bit map image of the characters and groups and thereby represent characteristics of the images themselves. After value code determination, i.e., conversion, they can be checked against a code dictionary. Retrieval of stored value codes for documents is accomplished by entering search words in a standard code, locating the value code corresponding to the standard code and conducting a comparison search in the value code. Apparatus for performing the method is disclosed. By the assignment of pixel-related code values, words are automatically converted. Fonts are correlated with logos limiting font selection of assigned value codes. The system can handle already established system fonts or new ones encountered, including those found difficult by prior art OCRs. The method accounts for variations in pixel density and pixel splatter and can handle material in Arabic, Chinese and Japanese. Editing requirements are substantially reduced.

| Character and Word Structure Code (CAWSC) Table | | | | | |
|---|---|---|---|---|---|
| Dictionary Words and Char. List | VW Logo | | | Daimler Logo | |
| | Font 3 [DATE OF FONT] | Font 26 [DATE] | Font 33 [DATE] | Font 131 [DATE] | Font 26 [DATE] |
| | [VALUE CODES] | [VALUE CODES] | [VALUE CODES] | [VALUE CODES] | [VALUE CODES] |
| King | 10001001... | 1000010... | 1001100... | 10010.. | 10000.. |
| A | 00111100.. | | | 00100.. | |
| B | | | | | |

FIG. 3

EP 0 692 768 A2

## Description

This invention relates to techniques for recognizing alphanumeric and other characters and symbols in image and for establishing a technique by which documents containing the characters can be retrieved from storage.

Today's approaches of converting characters by computer programs using various complex algorithms is clearly functional and reasonably successful. However, these techniques are cumbersome and relatively slow. Obtaining access to characters in image is limited and is even slower. For various reasons, including the variation in the density of pixels of any individual font varying between scanners or other input machines, selecting text in image by pattern matching from a starting point of a standard set of characters is difficult.

An object of the present invention is to provide a method of recognizing individual characters or groups of characters from an image of text and assigning a value thereto for subsequent recognition or retrieval.

In this context, the term "character" is used to mean any letter, number, punctuation mark or other symbol used to communicate in human-readable form. A "group" of characters refers to a word, sequence of numbers or other cluster of characters having a spacing indicating that the characters are intended to have a meaning when considered together, although it is recognized that "pixel splatter" (defined hereinafter) may in some instances combine characters or words which were not intended to be combined.

Briefly described, the invention comprises a computer-implemented method of recognizing characters and character groups comprising establishing in a first computer memory region a first table of logos correlated with value codes of fonts used by creators of documents known to use those fonts, the first table having value codes for a plurality of characters and, if desired, character groups in each font, each said value code including a sequence of on and off bits from selected scan lines through bit-map images of the logos and fonts. A document page having printed matter thereon is scanned and a bit-map image representative of the printed matter on the document page is stored in a second computer memory region. Value codes for images appearing at a top portion of the image of the page are derived from the bit-map images and extracted from the second computer memory region. The extracted value codes are compared with the first table to determine the existence of a match between portions of the extracted value codes and a stored logo. When a match is found, identifying at least one font associated with the stored logo, additional value codes for a plurality of characters or character groups in lower portions of the image derived from the bit-map images of the page in the second computer memory region and are extracted. The extracted additional value codes are compared with value codes for the identified at least one font, verifying the identity of the font with the font appearing on the page image. Value codes for individual characters or character groups on the page are then extracted and compared with stored value codes in the first computer memory region, thereby identifying all characters and character groups on the page.

Alternatively, the font table may be established for characters, numbers and special signs only, i.e., without character groups (words). By "extracting" it is meant that the signals are non-destructively copied or otherwise made available for comparison.

In order to impart full understanding of the manner in which these and other objects are attained in accordance with the invention, a particularly advantageous embodiment thereof will be described with reference to the following drawings, which form a part of this disclosure, and wherein:

| | |
|---|---|
| Fig. 1 | is a representation of a word which will be used to explain features of the invention; |
| Fig. 2A | is a representation of the word of Fig. 1 in digitized form; |
| Fig. 2B | is a representation of characters illustrating the concept of pixel splatter and the statistical analysis of pixel lines; |
| Fig. 2C | is a representation of possible permutations of overlay of pixels in the analysis of pixel lines; |
| Fig. 3 | is a schematic representation of a character and word structure code table in accordance with the invention; |
| Figs. 4, 5A and 5B | are schematic block diagrams of apparatus for performing the method of the invention; |
| Figs. 6A, 6B and 7, | taken together, are a flow diagram illustrating the method of the invention; and |
| Fig. 8 | is a chart of typical characters which can be processed in accordance with the invention. |

In general terms, the method of the present invention can be thought of as beginning with text being digitized by a scanner or the like of the type commonly used with optical character recognition (OCR) equipment and also used with facsimile and other apparatus. In equipment of this type, a page of text is scanned by illuminating the text, usually a transverse band of the page at a time, and exposing the illuminated band of text to a linear array of photosensitive detectors. If there is text (or other printed matter) in the scan line to which the detectors are exposed, some of the detectors will "see" the background color of the page (e.g., white) while others will see the dark of the print on the page. If there is nothing printed in a specific scan line, all of the detectors will see white. The detectors are sequentially exposed to the full page, one scan line at a time. Each line of light and dark can then be stored as a digitized image or otherwise processed.

In the following description, the terms "printed matter" and "text" are used to refer to anything which is typed or printed by any process in a human-readable form on any paper-like medium and which can be, or has been, scanned by a scanner of the general type described above. It is recognized, of course, that pictures and other non-text material may appear on a document with or without text. Such material can be handled by imaging techniques which may be used in conjunction with the present invention but which are not *per se* part of this invention. The existence of such material, with a few exceptions, will be largely ignored in the following description.

Also, the terms "character group" and "word" are used essentially interchangeably, although it must be recognized that either can refer to associated strings of characters which are not normally thought of as words, e.g., i486, 1994, $4x^2+3x-15=z$ .

In order for text to be recognizable by any equipment, the resolution of the scanner must be sufficiently high to reproduce adequate details of the characters forming the text, i.e., the scan lines must be sufficiently close together so that several scan lines are generated for each line of text and the points of light and dark detection along each scan line must be sufficiently numerous and close together so that several points in each character are present in each scan line. Resolutions of several hundred dots per inch (dpi) are common today, the most common at the present time being 300 to 600 dpi.

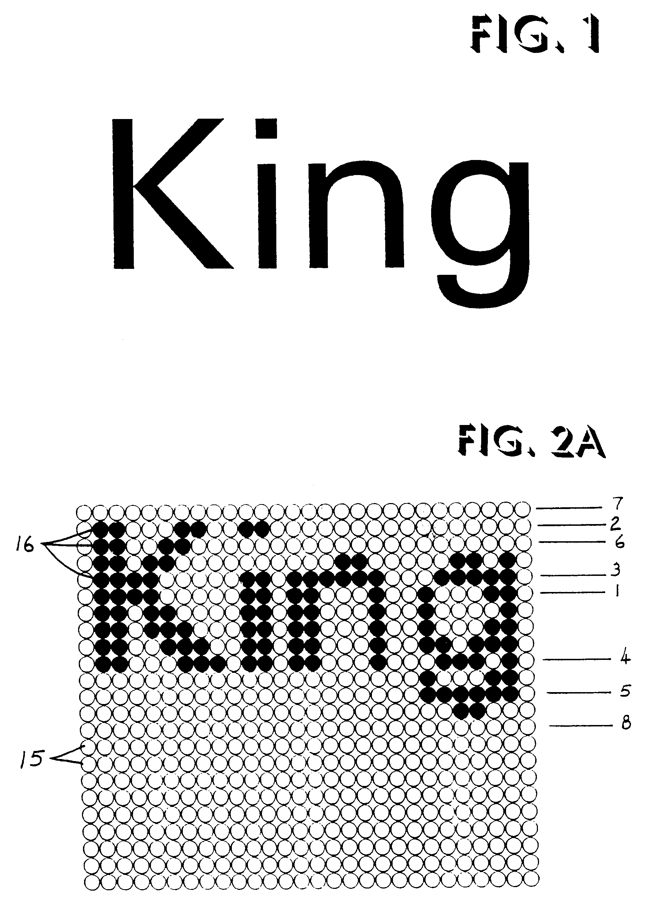

For purposes of discussion, the word "King" will be used and a much enlarged representation of that word in a common font is shown in **Fig. 1**. The result of scanning is an electronic digitized image which can be represented by, and which represents, a pattern or raster of light and dark dots forming picture elements, or "pixels", which, in a particular scanner, may resemble the pattern shown in Fig. 2A in which the word of Fig. 1 is shown in digitized, or bit-map image, form. For convenience, the results of each optical detection are shown as circular dots, although it will be recognized that the pixels need not be, and normally would not be, precisely circular. Those pixels which are the result of optical detectors receiving reflected light from unprinted portions of a page are shown as empty circles 15 and those which have received light from characters on the page are shown as filled-in or dark circles or pixels 16. The term "pixels" will be used herein rather than "dots" to describe the elements of the raster and to avoid confusion with "dots" which will refer to marks as parts of letters such as the dots above the letters "i" and "j". A horizontal row of pixels represents one scan line.

Thus, **Fig. 2A** illustrates an image of the word "King" as it can be reproduced from the bit map of a scanned printed representation of that word, and also schematically represents the arrangement of electronic bits stored in a memory as the result of storing the scanner output.

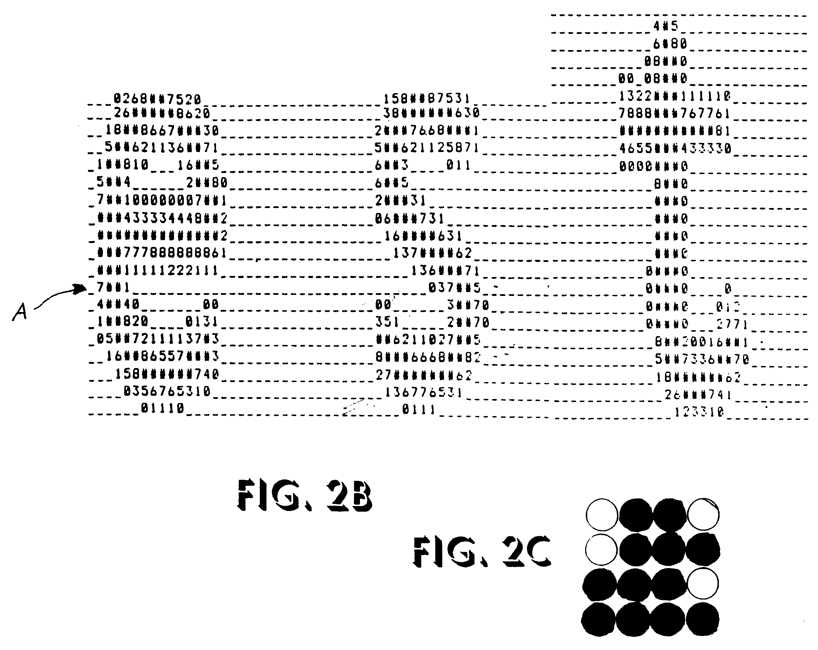

The method of the present invention involves constructing a multiple-layer, character- or word-structure, pixel-related code which will be referred to herein as a multiple "value code" to distinguish it from a conventional object code such as ASCII in which characters are represented by an arbitrary combination of numbers (as in ASCII) or other alphanumeric characters (as in hexadecimal, for example). The value code varies from font to font. A change in the density of pixels of the same font due, for example, to different input equipment such as a different scanner, is treated as a new font. A test program can be used to determine per font the overlay of pixel splatter as shown in Fig. 2B. Each layer of the value code is determined by the on and off conditions of the pixels with a dark pixel typically being considered an "on" condition and a light pixel as "off". Layers are determined by value or search runs accomplished in parallel with each other to increase processing speed, the number and levels of the runs being used as required for individual recognition problems.

Referring to Figs. 1 and 2A, "run levels" are indicated as levels relative to a line of text along selected scan lines. Each "run" is along a single scan line. For purposes of the present discussion, eight run levels are used for determining, first, the overall characteristics of the character group being examined, and secondly, sufficient detail to allow unambiguous recognition. The levels of the scanned pixel lines for the various runs are identified by numerals 1 through 8. More or fewer run levels may be used, depending on various circumstances including the nature of the text and the like, even though it is planned to use as many as all scan lines.

More specifically, the scan lines selected to be levels of the runs are chosen to determine outer limits of the group, such as total length; height, specifically including the height of a capital letter, if any; the existence of a letter having a dot, such as a lower case i or j; the presence of other diacritical marks, such as the German umlaut (ü, ö); risers (as in b or d); or descenders (g, q or p). While these examples refer only to letters of the alphabet, similar characteristics may be present in any number or other symbols. Based on these characteristics and good print quality, the approach would permit use of less than all run lines, as shown below.

Thus, in a typical case, run 1 determines code values across an approximate mid-point of the characters. Run 2 determines the furthest upward extension code value and may also detect dots or umlauts. Run 3 determines the code value for the upper parts of lower case letters. Run 4 determines the code value for the lower parts of the lower case letters. Run 5 determines the code value for the lowest parts of the lower case letters, especially descenders. Run 6 detects code value additions to the upper case characters and may detect dots or umlauts and the like if they were below the level of run 2. Runs 1-6 are used in a combined manner to determine the pixel-string length of each word or the like. Runs 7 and 8 are primarily to detect a possible change to a different (larger type) font. Closely spaced test lines (at the level of runs 1-6) can detect a change to a smaller font. Not all of the runs listed above will always be saved as part of the value code. In many cases, runs 2, 5, 7 and 8 together with information about the total length of the character or character group pixel string will be sufficient to produce a code capable of unambiguously defining a character or character group in the case of text with good print quality. Adjusting for skew conditions is known in the art.

Before starting the actual analysis of a page, or concurrently with analysis runs which will be described as "value runs", multiple parallel "search runs" can be made to determine the existence of text on the page, numbers or special symbols, as a precautionary step, to find out if the font is known or if a logo appearing on a page is one which has been stored and is known. The search runs also produce value results which may or may not be saved as part of the value code, depending on whether any of them end up being the selected value lines.

The scanning of a page of text is done from the top of the page downwardly and recording for search or analysis begins when a scan line detects the first dark pixel. At that event, it is assumed that text will follow and the scan line containing the first dark pixel is viewed as the top of the text, equivalent to the level of run 2 in the example of Fig. 2A. It is assumed for this discussion that runs take place from left to right, although the reverse is possible. Runs are also possible diagonally. The value for the first scan line of pixels is recorded, and each line thereafter is also recorded. A decision is made later to determine which lines will be retained as part of the identifying value code.

The system will start out using all obtained value results and a character-by-character value determination. The identifying code is created by noting the sequence of light and dark pixels in a scan line and recording them as "on" and "off" states which will be referred to herein as 1 and 0 values. Using the example of Fig. 2A, run 1 (the row of pixels identified by numeral 1 at the right of the figure) has a value which begins with a 0 followed by four ones, five zeroes, two more ones, a zero, etc. Thus, the code value for that line (ignoring the initial zero which appears in each scan line and therefore does not serve to identify the character group) is:

11110000011011000100100011.

Run 2 has the value:

11000110011000000000000000.

Run 5 has the value:

00000000000000000000111111.

For purposes of easier understanding, the present examples will ignore the occurrence of pixel splatter which will be considered subsequently. Thus, it is assumed for the moment that pixel splatter does not occur. The total code value for this word is then determined by assembling the individual line values in a desired way in accordance with an established set of rules. These rules require no inherent sequence, but the sequence of using the runs in the order given in Fig. 1 has certain advantages. If the values for lines 1, 2, 5, 7 and 8 are assembled in that sequence, the word "King" in this raster has the code value:

11110000011011000100100011
11000110011000000000000000
00000000000000000000111111

followed by 52 0s for lines 7 and 8. Compression would dictate eliminating all zeros after the final 1 since they do not contribute to uniqueness of the character group identification.

The above code string constitutes a value code identification for the word "King". Depending on resolution and other factors, more or fewer runs can be used to create a code string for each word encountered in a text. The determination depends on such factors as the size of the font being analyzed relative to the scanner resolution and the complexity of the font itself, i.e., whether the lines forming the characters are thick or thin, the presence or absence of serifs, etc. However, the determination is not a matter for human decision except in unusual cases. This can be done automatically as will be described subsequently.

The above has described an idealized situation in which no pixel splatter occurs, but as a realistic matter, pixel splatter must be dealt with. This term refers to the fact that analysis runs from a number of examples of the same character will produce analyses of pixel lines which are not the same each time. **Fig. 2B** illustrates this phenomenon. It will be noticed that Fig. 2B has multiple lines for each of three characters and that each line is marked with several symbols which show the overlay, or percentages of occurrence, of a pixel in each possible pixel position. This figure is the result of analysis runs of a large number, e.g., 400, of examples of the same character in the same font and with reasonably good print quality. In this illustration, the symbol # indicates 100% overlay, i.e., where # appears, a pixel existed every time that character was analyzed by the system. Most of the # symbols appear in the core or heart of the character image. Toward the edges of the character, other numerical symbols appear, showing that pixels appeared at those relative locations less often, the symbols other than # having the following meanings: 0 indicates that pixels at that location occurred in less than 10% of the runs, 1 indicates less than 20% (between 10% and 20%), 2 indicates less than 30%, etc. Of course, it may occur that an occasional pixel may exist outside of the character boundaries illustrated, but this is likely to be very rare.

While in extreme cases an additional pixel or pixels may occur, the examples shown can be used to determine the boundaries of each line's value code for each pixel line, thus accepting the various code values for a "hit". For this purpose, the table containing the various possibilities and against which the values are run for comparison and hits will take into consideration prior test runs by the scanner and fonts being used in order to determine the structure of the value code. The table referred to is the character and word structure code table (CAWSC table) discussed hereinafter.

Tests have shown that the system as described will successfully recognize characters when the print is of good quality, and tests suggest that print of poor quality can also be used, the difference being the number of pixel lines which are absolutely necessary for reliable recognition. It appears that even fragmentary characters, which cannot normally be recognized by conventional OCR, can be recognized by the technique of the present invention so long as the fragmented character includes a number of complete pixel lines, whether horizontal, vertical or diagonal.

**Fig. 2C** shows the permutations which can exist for a specific line of pixels in the first character of Fig. 2B. While the approach to store value code possibilities for a pixel line is shown in Fig. 2C, using the example of the line in Fig. 2B indicated by the arrow A, mathematical solutions are also possible, using Boolean algebra. The value results of each pixel line can be compared to values as shown in Fig. 2B and a best out of N result for all value runs can be defined to be acceptable as having defined a character (or word), number or special sign, N being a selected arbitrary level of accuracy considered acceptable. Words, after value code determination, i.e., conversion, can be checked against a code dictionary.

The use of value codes has the following benefits for various systems, notably a mass document storage and retrieval system. First, when a document is scanned into a system for subsequent retrieval, no additional conversion or editing is generally necessary. Each single character or character group is encoded in the manner described and the resulting code string, which is also a conversion, is stored with any convenient form of correlation with the document, preferably including date information to simplify searching. No time-consuming indexing is necessary when using, for example, the search word selection technique disclosed in U.S. patent 5,109,439 and no summaries or other reference materials need be prepared. Of course, a misprint, new word or ambiguity may produce a non-existent code which is then flagged for display. It may, for instance, be possible to recognize many words by value codes based on runs including only the upper parts of a capital letter along with risers, descenders, dots and the like detected during evaluation of the text initially, permitting word recognition during evaluation of any of runs 1, 3, 4 or 6 with runs 2 and 5, or 2 and 5 alone. If the risers, descenders and dots are adequate to identify the word, other in-between ambiguities can be ignored (unlike most OCR techniques which require an editing process to produce correct text).

Secondly, the technique described above is extremely fast. The scanner produces the basic information as soon as a scanning output begins to be created. If character recognition is not to be used, the only steps necessary to generate the code are determining the beginnings and ends of single characters or character groups, and reading and storing the scanner output in groups associated with the character or character groups, i.e., words.

It should be emphasized that the runs are done concurrently in parallel and not in some time sequence, even though the latter could be done by fast processors. In other words, once the first dark pixel is found, a predetermined number of scan lines following that first pixel are recorded. A minimum of 14 scan lines would be recorded for the example of Fig. 2A because that many lines would be needed to encompass the vertical height of the image of that particular font, but 20 or 30 could be recorded. The recording and processing are done in parallel, by individual "channels" of processing equipment which will be described. Of the recorded scan lines, a few are chosen for analysis at first, as indicated above.

In order to permit analysis of text including characters or words stored in the form of the present invention, a special table or dictionary, referred to herein as a character and word structure code (CAWSC) table, is established in which the characters first, later possibly words, are correlated with the code established by the procedure described above. The table is established for each font in which text is expected to be received. It will be noted that retrieval is simplified because comparison is made in the binary word format. However, new fonts, not originally included in the table, will be encountered. Also, text scanned by a scanner having a different pixel density from a scanner previously used will change the resulting code and a previously used font will produce an output on the new machine appearing to be a new font and will be treated as such. When this occurs, a conventional character recognition technique is used to first recognize the characters forming the word. After the characters are recognized the first time, the values in the form disclosed herein for those characters are stored after a test run of the font, correlated with an identification for each character which may be in ASCII or any convenient code. Characters and words can then be assembled using the ASCII code and the value codes and stored in the table.

There are two basic reasons for storing the value codes correlated with ASCII code. One is for retrieval purposes. A computer keyboard generates an ASCII code for a character as the key representing that character is pressed. The ASCII code can then be used, from the table, to find the correlated value code for the character (typically using Boolean algebra or threshold logic) and the value code is used for searching. If the search is for a character group rather than a single character, as would most often be the case, the value codes for the keyed-in characters would be assembled to form multiple character value codes for the character group (again using Boolean algebra) which would then be used for searching.

The second reason has to do with adding a new font to the CAWSC table. A new font can be added by reading the new text using conventional OCR techniques, editing the resulting text and then adding the text characters (and words) to the table. Since conventional OCR produces ASCII codes representing the text, the ASCII codes are used to provide the table with the words associated with the value codes generated in accordance with the present invention. When adding a new font, it is highly desirable to use an editing technique in accordance with that disclosed in U.S. patent 4,553,261, including displaying an image of the character or word about which conversion is unsure along with a selected number of words or characters on either side of the questionable one.

Because this technique uses stored logos, it should be noted that an easy way to do so is to use a greatly reduced number of individual pixels, typically at certain outline locations of the logo structure, or at certain selected points therein, for easy storage and retrieval.

In the CAWSC table, it is most convenient to store logos in either image, or significant pixel locations for logos, or in value codes and to store value codes of fonts known to be associated with those logos correlated with the logos. In this context, a logo can be a company symbol which appears at the top of letterhead or an advertising brochure, or it can be a printed letterhead such as that used by an architect, government agency or attorney. In the process of constructing this table, when documents such as letters from a specific correspondent are analyzed, it may be learned, for example, that correspondent X uses three fonts with some regularity. Those three fonts are correlated with the logo so that, in the process of inputting a letter from correspondent X in the future, as soon as the logo is recognized, code values developed from the subsequent text in that letter can be compared first with those three fonts, eliminating the need to search through a large number of fonts for the right one.

The table can be organized by one or more or the following: logo, font, date of font, total pixel length, values, (Boolean algebra) and by a standard code such as ASCII representing the same character and possibly word. The date when the font was first used can be important. Assume, for example that a certain scanner with a resolution of 300 dpi is replaced by a scanner with a resolution of 400 dpi. This changes the pixel density and creates a "new" font, as discussed above. Since the fonts would normally be linked to the logos of those using the fonts, it will be known that a newspaper uses, for example, 8 fonts. Entering a search word for a specific font with bracketing dates including the date on which the scanner change took place would probably result in not finding the desired document. However, if the date of the scanner change is entered, both the new and old fonts can be used for the search. The date of the font is also useful, since fonts can change with time.

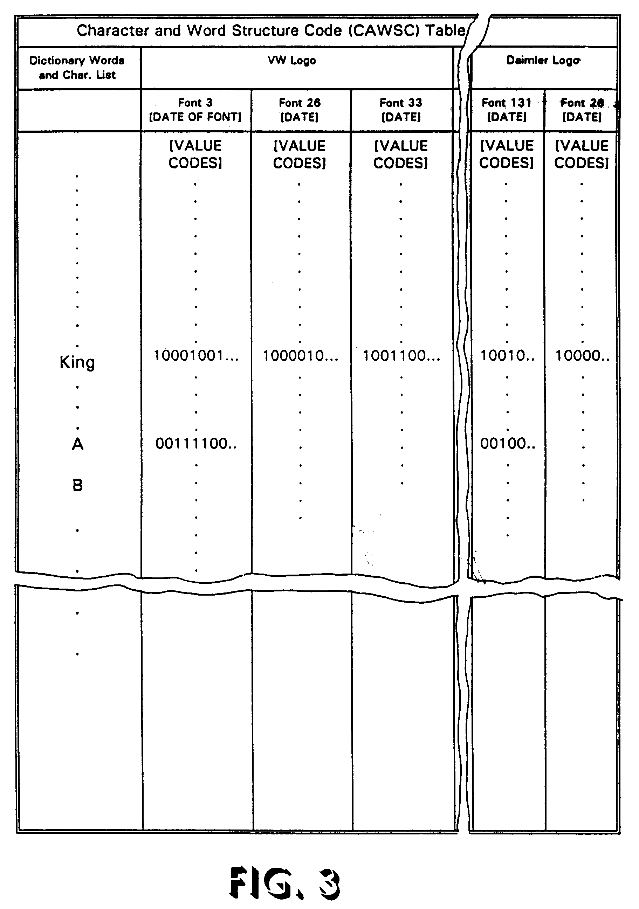

A general plan of a character and word structure code (CAWSC) table is shown in **Fig. 3.** This is not intended to be a physical map of such a table since physical location in a computer memory does not necessarily have any relationship to correlation unless the memory is storing a bit map or image. Dictionary words and individual characters, as well as special signs, preferably locatable in alphabetical order, are correlated with fonts employed by various correspondents or other text sources, as indicated above. In each case, the value codes as constructed in accordance with the present invention are coupled with a suitable Boolean function and stored in a way so that they are correlated with other code representations of the dictionary individual characters or words.

The CAWSC table thus includes the characters (and words) identifiable by fonts, locatable alphabetically and stored by a standard code (such as ASCII) which can also be used to locate it for retrieval, and also stored by value codes in accordance with the invention. Both characters and character groups should be stored with height, width and spacing information. In the CAWSC table, the value codes for words and characters are preferably stored with all of the run line values so that a match with the proper character or word can be obtained regardless of how many lines are used in a particular processing effort. If the processor seeks a character match using only lines N, 2 and 5 (where N indicates any one or two lines needed to give pixel length information), comparisons are made only with value lines equivalent to runs N, 2 and 5 in the stored characters. It would also be possible to store in the CAWSC table only those runs adequate to unambiguously identify the word.

Immediately after a document has been run through the scanner and the image is in buffer storage, preliminary search runs can be performed in parallel to determine the existence of text, numbers, special signs, pictures, graphics or a logo. If a logo is present, it can be used to help to quickly identify the font. A non-text element, such as a picture or the like, is readily identifiable by "on" pixels extending for distances greater than would be expected for text, especially long, continuous vertical strings of "on" pixels, while detection of pictures and the like is state-of-the-art.

The distances between the scan lines are established by the resolution of the scanner. However, by choosing the increments of distance between the test run lines, i.e., which scan lines are to be used as run lines, to be consistent with the heights of various fonts of the identified logo, the determination of which font is present in the text is made more rapid, especially if more than one font associated with the logo have the same height. For example, the value-producing search runs can be activated for the possible fonts in question and the values derived from a test run can be compared with value codes in the character and word structure code table to see if the values are present. Regardless of which search runs produce values, those which correlate by a selected percentage with the CAWSC table would be the correct font, eliminating the need for using the other runs. Once a font height is determined, run lines are chosen so that they are all within the scope of the font.

The value search runs result in pixel values which are compared with the characters and words in the CAWSC table. In many cases, the value code structures determined by search runs N, 2 and 5 will result in finding a matching correct word in cases of good print.

When considering values of total words, values can differ from word to word within a given font. In some cases, the values from search runs N, 2 and 5, or 2 and 5, or alternatively 1, 3 and 4 will suffice to identify a word. Values thus established can be positively assigned to specific words in the table, if words are being used. For example, if the values of search runs N, 2 and 5 are correct, then errors within 3 and 4 can be ignored and need no editing unless the user wants the image to be corrected, possibly by copying it, but never to substitute for the original.

The CAWSC table is established cross-referencing characters (and possibly words) to values and values to characters (possibly words), in both cases the characters and words being in a standard code.

The CAWSC table includes by fonts all characters, numbers, special signs, etc., and it can be added to or otherwise modified if use indicates that to be desirable. This also pertains to search runs for numbers, special signs, etc.

While it is possible to operate the method and apparatus so that it accepts only 100% matches of multiple runs, it is also possible to accept less than 100% and also to arrange for cropping or truncating a value code such as the example of fig. 2B. Furthermore, it is possible to use the # positions of Fig. 2B (i.e., 100% pixel overlay) exclusively while permitting, for example, 95% accuracy for acceptance in case a deviation should occur within the class of # locations. This in combination with the run lines used will provide a high degree of accuracy. Using this approach can permit combining several similar fonts.

Spaces within any given word of one font may vary as the result of proportional spacing, thereby altering the spacing between letters and the number of zeroes between letters in any word code. Vertical checks are used to determine spacings between character groups or words and also spacings between characters within words. A vertical check is done by analyzing the relative positions of zeroes within individual lines of the value codes for a character group. In the example of **Fig. 2A** for which three lines of value code are given above, there is insufficient information to determine unambiguously where separations between characters exist because vertically aligned zeroes happen to exist at locations which are not character separations but merely vertically aligned spaces within the characters themselves, as well as between the characters. However, because all of the scan lines are read into a memory for analysis (not just the three selected above), that memory has information allowing determination of where the character spaces exist, even though after analysis that information may not be retained.

The following possibilities exist for spacing within a word:

1. normal
2. narrow
3. very narrow
4. wide
5. very wide.

The solution to coping with the possible variations is as follows. Within a single font, the same word may have 5 different sets of pixel values and pixel lengths, all leading to and correlated with the same word in a standard code. Only very narrow words (which would also cause recognition problems in conventional OCR applications) will yield scans along all lines from which character separations may not be discernable and then only in certain fonts. For example, in certain fonts the lower-case letter combination "cu" has no clear separation because a serif on the beginning part of the "u" almost seems to extend over the "c".

If the first analysis does not result in a match with the entire code, the difference in spacing is handled by comparing groups of pixels (which may represent individual characters) in the value codes which are not associated with (i.e., are in between) vertically aligned channels of zeroes. By this technique it is possible to evaluate the groups which are likely to be associated with individual characters but which, in any event, eliminate the effect of extra groups of zeroes between characters. That avoids the problem of very wide spacing.

In case of a word's value codes, for narrow spacing, groups of pixels are selected and compared with stored value codes. The groups are selected to be of several lengths and searched concurrently by parallel processors. When a match between a group and a stored value code is found, the remaining parts of the value codes are compared with different numbers of zero groups to confirm the match.

When there appears to be no spacing between characters, a one-by-one comparison of individual character value codes from the CAWSC table is made with pixel groups chosen on the basis of character width information. If a character match is found, that character is ignored in subsequent comparisons and the process is continued with the next group of pixels. If no beneficial results are achieved, the text is flagged for review.

As to spacing variations between words, which arises most commonly in proportionally spaced material, evaluating spacing with vertical test runs can be used to identify between-word spacing.

A code match may also be complicated by the presence of a mark at the beginning of a character or word which is "interpreted" by the scanner as an intentionally printed mark and which shows up in the bit map as an extra pixel at the beginning of a scan line. To see if failure of a match is due to this problem, a character value code is compared with a group or groups of pixels, sequentially offsetting the group to the right after each comparison. If a comparison results in a match, that entire group of pixels which was matched is ignored and comparison is made with the next group or groups of pixels to the right.

Documents which are not scanned parallel or perpendicular with the edges, which can be due to incorrect paper feeding, or which were printed at an angle, result in a "skew" condition in which the scan lines are always at an angle to the lines of print. However, skew correcting routines are conventionally available to correct that problem, for example from Adobe Systems, 1585 Charleston Rd., Mountain view, CA 94039-7900 and it will not be further dealt with herein.

In order to retrieve a document which has been scanned, a word from the text to be retrieved is typed into the computer which produces multiple codes in the form of Boolean functions coupled to an ASCII representation of the word. From the CAWSC table, the value codes are extracted and used in a comparison search with the stored material. Since it is all in machine language, the search is fast and a representation of the word based on a predefined percentage of value line hits is recognized if it is present in the mass storage. All occurrences of the word should therefore be found with few or no errors. Normal search techniques can be employed to narrow the search if there are too many "hits" and the result can be displayed, printed or communicated as desired. On the other hand, if a full sentence is known, or a phrase, or an excerpt, these can also be selected since the system provides for selection of words in any number in image.

Hardware needed to perform the method of the invention should be custom tailored to the size of the business which will be using it and the level of performance desired. For a large operation requiring smooth workflow, using apparatus available today, two or three Intel i486 processors coupled for parallel cooperative operation on parallel processing modules and operated by one person using a personal computer is adequate. A parallel processing module having capabilities (among others) which are especially suitable for use in this process is the Modular 4 or Socon 80, made by the manufacturer of the Modular 4 described in U.S. patent 5,133,024 issued July 21, 1992, which is hereby incorporated by reference. Good use is made of the parallel processing capabilities of the Modular 4 or Socon 80 as processors which can be thought of as "equipment 1" and "equipment 2" wherein equipment 1 is used for normal test and value runs while equipment 2 is used for difficult words or new fonts, permitting intervention by the operator with the controlling PC if necessary. During times when no problems exist to be handled by equipment 2, its processing capabilities can be used in parallel with equipment 1 to increase the speed of the system. While the apparatus can be provided with a printer for document identification or for producing a hard copy for any purpose, this is not regarded as being an essential part of the apparatus.

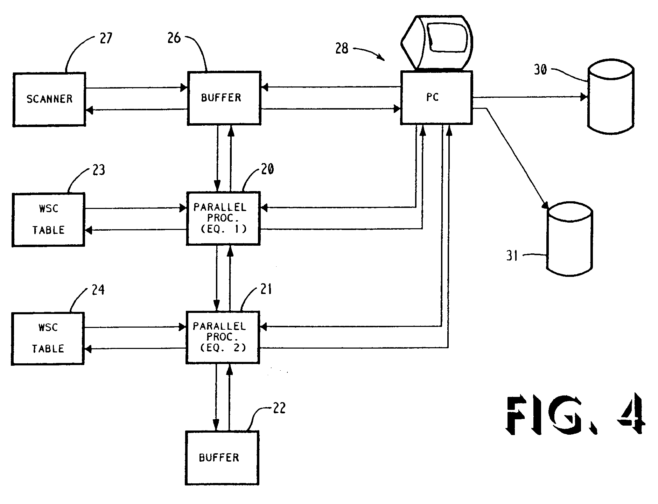

An apparatus to perform the above described method is shown in **Fig. 4** which includes first and second parallel processing controllers 20 and 21. These processing controllers preferably include features of the Modular 4 or Socon 80 processors mentioned above and a plurality of individual processor chips. These and subsequent versions of the apparatus are very flexible controllers and processors which are capable of channeling tasks to different processors for parallel processing. Each of processors 20 and 21 is connected to the above described tables 23 and 24 and through suitable busses to buffers 22 and 26. The tables are also bussed together for updating purposes. A scanner 27 provides scanned images of documents to buffer 26 wherein the images are available for processing by processors 20 and 21. A computer 28 controls and provides displays of control software and of material to be edited and communicates with mass storage units 30 and 31 which can include WORM and optical disk storage. Storage unit 30 may be dedicated to image storage and unit 31 to code, although they need not be physically separate.

Processor 20 is intended to perform the parallel search and value definition runs. Processor 21 is preferably used substantially independently of processor 20 for identifying new or unknown fonts and logos. As such, it is important for processor 20 to be supplied with extended hardware capabilities for parallel processing to maintain the speed of handling processing of documents within the desired rate of 1 per second or faster. Processor 21, on the other hand, can incorporate conventional character recognition equipment and may utilize buffer 22 and the display capabilities of control computer 28 for human editing operations, where necessary. Processor 21 should also have the parallel processing capabilities of processor 20 because it is contemplated that it may be required to deal with plural new font or problem areas concurrently.

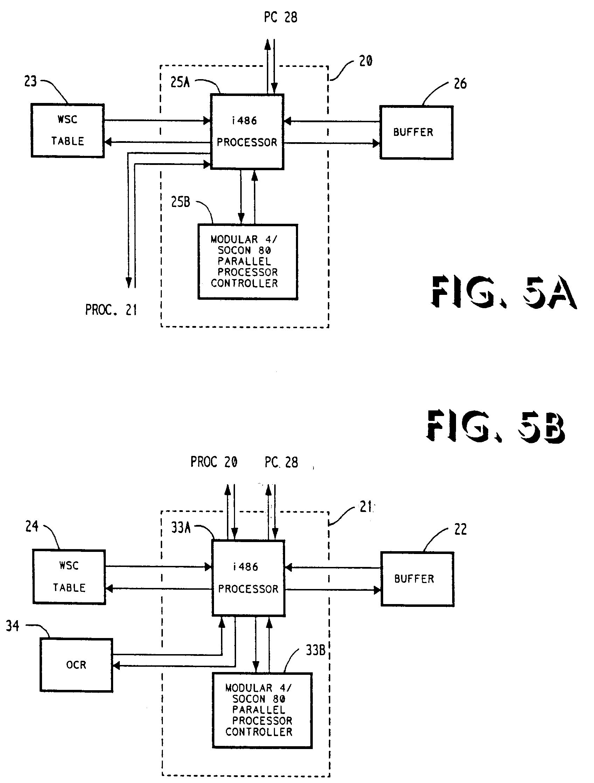

**Figs. 5A and 5B** show the processors separately, processor 20 including a central processor chip 25A such as an Intel i486 which works in conjunction with one or more Modular 4 or Socon 80 parallel processor controller modules 25B, each being capable of 256 substantially independent concurrent processing operations. Buses are provided to permit complete bidirectional communication between these components and with the controlling PC 28, CAWSC table 23 and processor 21. Processor 21 also includes an i486 processor 33A, a Modular 4 or Socon 80 module 33B and the bidirectional busses. In addition, processor 21 includes, or is in communication with, an optical character recognition unit 34 for use as described herein.

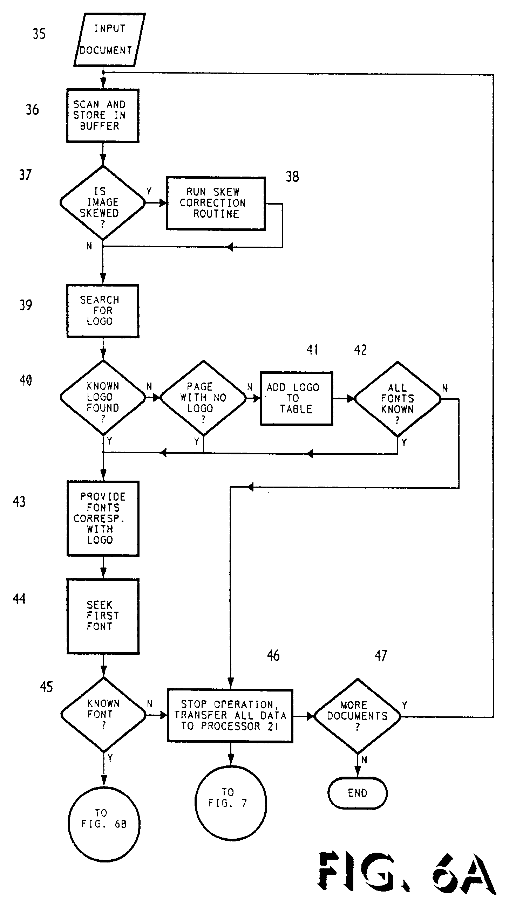

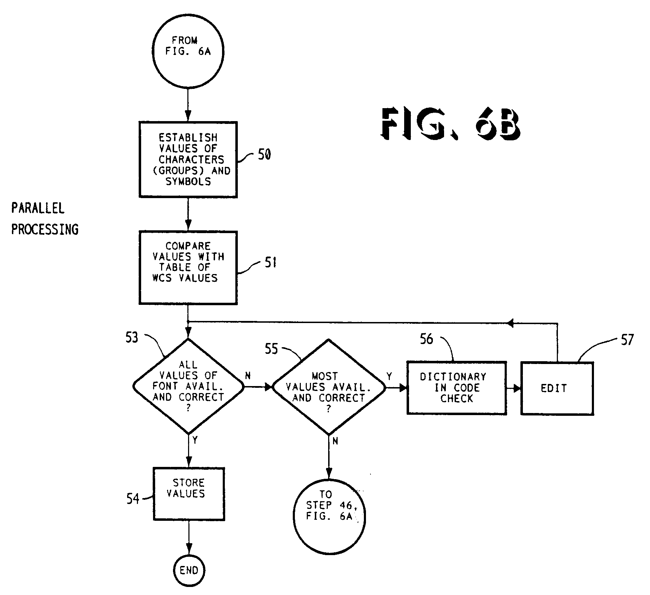

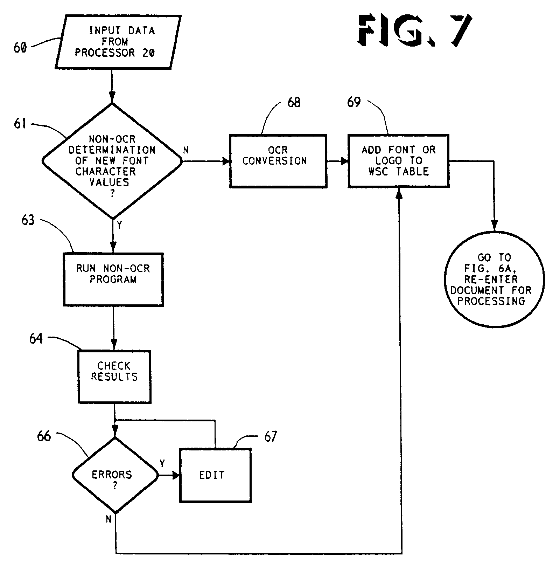

Figs. 6A, 6B and 7 illustrate the method of operation of the apparatus of Figs. 4, 5A and 5B as a sequence of steps. These figures constitute a single flow chart when considered together. Beginning at the top of **Fig. 6A**, a document 35 is fed into a scanner and scanned, 36. The resulting image is stored, 36, in buffer 26 and is examined to determine if it is skewed, 37. If so, a skew routine is run, 38, to insert corrections. The image is searched for an area which constitutes a logo, 39. If a known logo is found, 40, all fonts previously associated with that logo are identified and thus made available. If it is a new logo, it is added to the logo table, 41, and, if it is new, a determination is made as to whether the font in use is known, 42. If the font or fonts are not recognized, the operation in processor 20 is terminated and the data accumulated thus far are transferred to processor 21, 46.

The fonts corresponding to the logo are supplied for further processing, 43. The font in the document image is compared with the one or more fonts corresponding with the logo in the CAWSC table, 44, the fonts provide information concerning the height and width of characters and spacing variations within and between words for adjustment of the selection of run lines to be used. If the height of a font is the same as the height of another font associated with the same logo, it may be necessary to make comparisons of value codes with the CAWSC table for single and/or several character groups until a hit signifies matching values, or the text can be flagged for an operator's attention, signifying mistakes or a new font. If a matching value is found, 45, the selected font is used. A flagged text is turned over to equipment 2 (processor 21), 46, while the system continues to process new or known material with equipment 1 (processor 20). A test for more documents is made, 47, and the routine either returns to scanning or terminates.

Having found a known font, the process continues as shown on **Fig. 6B**. Values of single characters or character groups and symbols are established, 50, and those values are compared with values in the CAWSC table, 51. At a convenient break point, such as the end of a document page, an evaluation of success is made, 53. If all of the values find matches, the values are stored as a completed document, 54. This is the end of the process for that document or page. If not all have been matched, a further determination of success is made, 55, to determine if most values have been matched. How "most" is defined is a choice made by the user of the system, e.g., 90%. If the result of that test is positive, the result can be checked against a dictionary in code, 56, errors can be manually edited, 57, and the text recycled to the input of step 53. If less than "most" were recognized, the process returns to step 46, Fig. 6A, the operation is stopped and data transferred to equipment 2. It will be noted that the processing beginning with step 50 is conducted in parallel channels, typically as many as 256 channels, so that comparisons with the CAWSC table for various characters and character groups is normally progressing concurrently. Multiple 256-channel modules can be added, if so required.

**Fig. 7** illustrates the general steps followed when a difficult or new font or problem is encountered, these steps being performed preferably by equipment 2 involving processor 21. When data are transferred according to step 46, the data are delivered in step 60. It is possible that processor 21 will be able to determine new font character or word values, 61, either by manual adjustment of spacing values or the like or by the operator viewing and recognizing a problem which was causing processor 20 to fail, or to fail too frequently, to successfully complete the process. If so, the non-OCR process is run, 63, and the results checked, 64. Any errors detected, 66, can be corrected by human viewing and editing, 67, and the resulting font and/or logo added to the CAWSC table, 69. If non-OCR conversion is not possible, a conventional, good quality OCR program is run, 68, and the resulting font and/or logo is added to the CAWSC table after a multiple test run via scanner and program has established the new font's pixel scatter, similar to the one displayed in Fig. 2B, correlated with the cross-reference information discussed above, 69. The document can then be re-entered for processing.

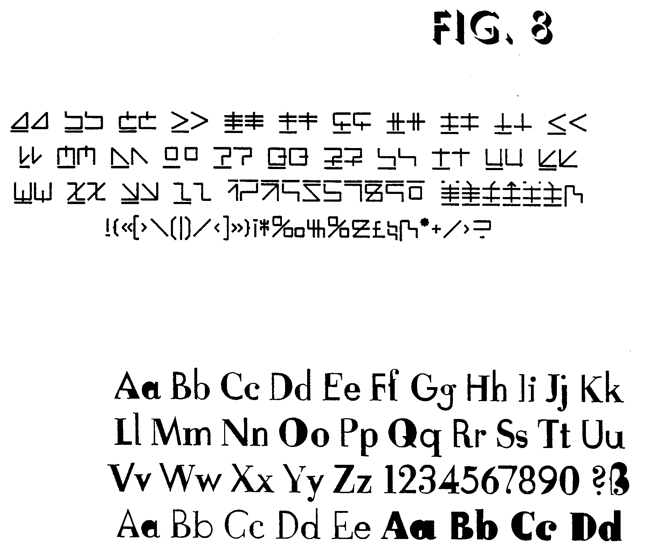

From the foregoing, it will be recognized that the present invention involves developing a new code which actually represents values of the characters and words scanned. It is based on features of the characters and words themselves without regard to language. Accordingly, it is possible to use the method and apparatus of the invention with any, form of language and essentially any kind of font or character, including Arabic script, characters in Chinese or Japanese, or special fonts such as those depicted in **Fig. 8**.

While certain advantageous embodiments have been chosen to illustrate the invention, it will be understood by those skilled in the art that various modifications can be made therein without departing from the scope of the invention as defined in the appended claims.

## Claims

1. A computer-implemented method of recognizing characters comprising
   establishing in a first computer memory region a first table (23) of logos correlated with value codes of fonts used by creators of documents known to use those fonts, the first table having stored signals representing value codes for a plurality of characters in each font, each said value code including a sequence of on and off signals representing bits derived from selected scan lines (1-8) through bit-map images of the logos and fonts;
   scanning a document page having printed matter thereon and storing in a second computer memory region signals representing a bit-map image representative of the printed matter on the document page;
   with multiple parallel processing channels, extracting from the second computer memory signals representing region value codes derived from the bit-map images appearing at a top portion of the image of the page;
   comparing signals representing the extracted value codes with signals representing values in the first table (23) to determine the existence of a match between portions of the extracted value codes and a stored logo;
   when a match is found, identifying at least one font associated with the stored logo;
   extracting signals representing additional value codes for a plurality of characters in lower portions of the image of the page derived from bit-map images in the second computer memory region;
   comparing signals representing the extracted additional value codes with signals representing value codes for the identified at least one font and verifying the identity of the font with the font appearing on the page image; and
   continuing to extract signals representing value codes for all individual characters on the page and comparing the value codes with stored value codes in the first computer memory region, thereby identifying characters on the page.

2. A computer-implemented method of forming value codes of characters appearing on a document comprising the steps of

scanning the document to form a bit-map image of printed matter in the document, the bit-map image including signals representing a matrix of bits having two states so that the state of each bit indicates the presence or absence of printed matter on the document;

selecting with multiple parallel processing channels lines (1-8) of the bit map signals to be stored, and storing signals representing sequences of bits from the selected lines (1-8) of the bit map as a value code representative of characters on the document.

3. A method according to claim 2 and further including establishing a character structure code table including stored signals representing codes recognizable by the computer correlated with signals representing the value codes for characters.

4. A computer-implemented method of recognizing character groups comprising

establishing in a first computer memory region a first table (23) of logos correlated with value codes of fonts used by creators of documents known to use those fonts, the first table having stored signals representing value codes for a plurality of character groups in each font, each said value code including a sequence of on and off signals representing bits derived from selected scan lines (1-8) through bit-map images of the logos and fonts;

scanning a document page having printed matter thereon and storing in a second computer memory region signals representing a bit-map image representative of the printed matter on the document page;

with multiple parallel processing channels, extracting from the second computer memory signals representing region value codes derived from images appearing at a top portion of the image of the page;

comparing signals representing the extracted value codes with signals representing values in the first table (23) to determine the existence of a match between portions of the extracted value codes and a stored logo;

when a match is found, identifying at least one font associated with the stored logo;

extracting signals representing additional value codes for a plurality of character groups derived from bit-map images in lower portions of the image of the page in the second computer memory region;

comparing signals representing the extracted additional value codes with signals representing value codes for the identified at least one font and verifying the identity, of the font with the font appearing on the page image; and

continuing to extract signals representing value codes for all individual character groups on the page and comparing the value codes with stored value codes in the first computer memory region, thereby identifying character groups on the page.

5. A computer-implemented method of forming value codes of character groups appearing on a document comprising the steps of

scanning the document to form a bit-map image of printed matter in the document, the bit-map image including signals representing a matrix of bits having two states so that the state of each bit indicates the presence or absence of printed matter on the document;

selecting with multiple parallel processing channels lines (1-8) of the bit map signals to be stored; and storing signals representing sequences of bits from the selected lines (1-8) of the bit map as a value code representative of character groups on the document.

6. A method according to claim 5 and further including establishing a character group and word structure code table including stored signals representing object codes recognizable by the computer correlated with signals representing the value codes for character groups.

7. A method according to claim 6 and further including, when the step of comparing signals representing the additional value codes of character groups with stored value codes fails to find a match with a selected degree of accuracy, comparing the extracted value codes with the word structure code table to determine the existence of the character group therein.

8. A method according to claim 7 and including storing the value codes for character groups in each document, and

searching for the stored value codes by entering object code, extracting from the value code table value codes correlated with the entered object code anti comparing the extracted value codes with stored images to find a document containing the value codes.

9. A method according to claim 5 and including establishing a dictionary of stored signals of value codes representing words in a selected language correlated with machine-language codes for the words, and

comparing the stored signals representing value codes derived from character groups on the document to identify the words represented by the character group value codes.

10. A method according to claim 9 wherein the character groups appearing on the document include groups representing incomplete, fragmentary words.

11. A method according to claim 9 wherein
    the dictionary includes value codes consisting of bit locations representing 100% pixel overlay, and wherein
    the step of comparing includes accepting a comparison as a valid match when a value code from a character group on the document is within a selected percentage less than 100% of being the same as a value code in the dictionary.

12. A method according to claim 11 and including using a character recognition program when valid matches resulting from comparisons are less than a minimum percentage, the minimum percentage being substantially less than said selected percentage.

# FIG. 1

King

# FIG. 2A

EP 0 692 768 A2

```
                                                              ----------------------------
                                                              ------------4#5-------------
                                                              ------------6#80------------
                                                              ------------08##0-----------
                                                              ---------00_08##0-----------
___0268##7520----------------158##87531--------------------1322###111110-----
___26#####8620----------------38######630----------------7888###767761-------
__18##8667###30---------------2###7668###1---------------##########81-------
__5##621136##71---------------5##621125871-------------4655###433330-------
_1##810___16##5---------------6##3____011---------------0000###0----------
_5##4_____2##80---------------6##5-------------------------8##0----------
_7##100000007##1--------------2##31------------------------##0----------
_###433334448##2--------------06###731----------------------##0----------
_###########2-----------------161###631--------------------##0----------
_###777888888861--------------137####62---------------------##0----------
_###11111222111---------------136###71-------------------8##0----------
_7##1------------------------------037##5-_-----------8##0____0------
_4##40_____00------------------00_____3##70----------8##0____0i?
_1##820___0131-----------------351____2##70-----------8##0___2771----
_05##72111137#3----------------##6211027##5-----------8##30016##1-:--
__16##86557###3----------------8###6668##82_--------5##7336##70----
___158#######740---------------27#######62-----------18#####62----
____0356765310-----------------136776531-----------------26###741-----
_____01110----------------------0111--------------------123310-----
```

FIG. 2B

FIG. 2C

| Dictionary Words and Char. List | VW Logo | | | Daimler Logo | |
|---|---|---|---|---|---|
| | Font 3 [DATE OF FONT] | Font 26 [DATE] | Font 33 [DATE] | Font 131 [DATE] | Font 26 [DATE] |
| | [VALUE CODES] · · · · · · · · · · | [VALUE CODES] · · · · · · · · · · | [VALUE CODES] · · · · · · · · · · | [VALUE CODES] · · · · · · · · · | [VALUE CODES] · · · · · · · · · |
| King | 10001001... | 1000010... | 1001100... | 10010.. | 10000.. |
| · · · | · · · | · · · | · · · | · · · | · · · |
| A | 00111100.. | · | · | 00100.. | · |
| B | · | · | · | · | · |
| · | · | · | · | · | · |
| · | | | | | |
| · | | | | | |

*Table title (spanning): Character and Word Structure Code (CAWSC) Table*

## FIG. 3

FIG. 4

PC 28

FIG. 5A

FIG. 5B

PROC 20    PC. 28

35 INPUT DOCUMENT

36 SCAN AND STORE IN BUFFER

37 IS IMAGE SKEWED ?

38 RUN SKEW CORRECTION ROUTINE

Y

N

39 SEARCH FOR LOGO

40 KNOWN LOGO FOUND ?

N → PAGE WITH NO LOGO ?

N → 41 ADD LOGO TO TABLE

→ 42 ALL FONTS KNOWN ?

N

Y

Y

Y

43 PROVIDE FONTS CORRESP. WITH LOGO

44 SEEK FIRST FONT

45 KNOWN FONT ?

N → 46 STOP OPERATION, TRANSFER ALL DATA TO PROCESSOR 21

→ 47 MORE DOCUMENTS ?

Y

N

Y

TO FIG. 6B

TO FIG. 7

END

FIG. 6A

17

FIG. 6B

PARALLEL
PROCESSING

FROM
FIG. 6A

ESTABLISH
VALUES OF
CHARACTERS
(GROUPS) AND
SYMBOLS — 50

COMPARE
VALUES WITH
TABLE OF
WCS VALUES — 51

53 — ALL
VALUES OF
FONT AVAIL.
AND CORRECT
?

N →

55 — MOST
VALUES AVAIL.
AND CORRECT
?

Y →

56 — DICTIONARY
IN CODE
CHECK

→ 57 — EDIT

54 — STORE
VALUES

Y ↓

TO
STEP 46,
FIG. 6A

END

# FIG. 7

60 INPUT DATA FROM PROCESSOR 20

61 NON-OCR DETERMINATION OF NEW FONT CHARACTER VALUES ?

N → 68 OCR CONVERSION

69 ADD FONT OR LOGO TO WSC TABLE

GO TO FIG. 6A, RE-ENTER DOCUMENT FOR PROCESSING

63 RUN NON-OCR PROGRAM

64 CHECK RESULTS

66 ERRORS ? Y → 67 EDIT

N

## FIG. 8

Aa Bb Cc Dd Ee Ff Gg Hh Ii Jj Kk
Ll Mm Nn Oo Pp Qq Rr Ss Tt Uu
Vv Ww Xx Yy Zz 1234567890 ?ß
Aa Bb Cc Dd Ee **Aa Bb Cc Dd**